# FASCICULE DE BREVET EUROPEEN

(11) **EP 3 030 776 B1**
(45) Date de publication et mention de la délivrance du brevet: **30.08.2017**
(21) Numéro de dépôt: 14755877.9
(22) Date de dépôt: 25.07.2014
(51) Int. Cl.: F02K 9/50

(54) **DISPOSITIF DE PRESSURISATION D'UN RESERVOIR D'ERGOL D'UN MOTEUR DE FUSEE**
VORRICHTUNG ZUR DRUCKBEAUFSCHLAGUNG EINES TREIBMITTELBEHÄLTERS EINES RAKETENTRIEBWERKS
DEVICE FOR PRESSURIZING A PROPELLANT RESERVOIR OF A ROCKET ENGINE

(30) Priorité: 06.08.2013 FR 1357809
(43) Date de publication de la demande: 15.06.2016
(73) Titulaire: Airbus Safran Launchers SAS, 75015 Paris (FR)
(72) Inventeur: ROZ, Gérard, F-27510 Pressagny L'orgueilleux (FR); HAYOUN, David, H3W 2Y2 MONTREAL (CA); VUILLAMY, Didier, F-76230 Quincampoix (FR); LASSOUDIERE, François, F-27200 Vernon (FR)
(74) Mandataire: Intès, Didier Gérard André
(86) Numéro de dépôt international: PCT/FR2014/051940
(87) Numéro de publication internationale: WO 2015/018999

(56) Documents cités:
- FR-A1- 2 976 626
- JP-A- 2009 274 505
- US-A- 2 701 441

## Description

La présente invention concerne un dispositif de pressurisation d'un réservoir d'ergol d'un moteur de fusée, comprenant une boucle de pressurisation ayant un réchauffeur primaire apte à chauffer l'ergol provenant du réservoir avant sa réintroduction dans ce réservoir.

Le moteur est habituellement un moteur ayant une chambre de combustion, dans laquelle deux ergols sont mélangés pour provoquer une combustion, les gaz en sortie de la chambre de combustion étant évacués via une tuyère, de manière à développer une poussée.

En particulier, les deux ergols mélangés dans la chambre de combustion sont un comburant, tel que l'oxygène, et un carburant, tel que l'hydrogène ou le méthane.

On s'intéresse ci-après en particulier à l'un des ergols, par exemple le comburant.

Classiquement, l'ergol est stocké dans un réservoir à l'état liquide, et ce réservoir doit être maintenu sous pression afin d'assurer que le débit d'ergol dirigé vers le moteur soit régulier.

Pour assurer cette pressurisation de réservoir, il est connu d'y injecter un gaz inerte tel que de l'hélium ou de l'azote. Il est également connu de réaliser une pressurisation dite autogène, selon laquelle un prélèvement de l'ergol à partir de son réservoir passe dans un échangeur de chaleur ou afin d'y être chauffé et vaporisé avant d'être réinjecté à l'état gazeux dans son réservoir de manière à y former un ciel gazeux d'ergol sous pression.

Par exemple, l'échangeur de chaleur utilise de la chaleur de combustion, provenant du moteur de fusée ou d'un générateur de gaz dédié. Dans le cas où l'échangeur de chaleur utilise la chaleur de combustion du moteur, il doit être conformé de manière à optimiser l'utilisation de cette chaleur. Dans certains cas, ceci impose des conformations relativement complexes avec une multiplicité de surfaces d'échange de chaleur.

De plus, la chaleur nécessaire au chauffage et à l'obtention de la vaporisation à la pression souhaitée ne peut être obtenue que lorsque le moteur est en phase active de fonctionnement.

Cependant, un ensemble propulsif pour fusée est généralement conçu pour respecter les phases de vol dites "phases de propulsion", pendant lesquelles le moteur doit développer une poussée apte à diriger la fusée, et des phases dites "phases balistiques" pendant lesquelles le moteur est éteint, de sorte que la fusée n'est soumise qu'aux lois de la balistique. La première partie du vol est une phase de propulsion, pendant laquelle une forte poussée est nécessaire pour mettre la fusée en orbite. Ensuite, pour les manoeuvres orbitales et le retour sur terre, des phases de propulsion alternent avec des phases balistiques, une faible poussée appliquée sur des laps de temps relativement courts étant suffisante. Il importe cependant que le moteur puisse redémarrer rapidement et dans de bonnes conditions à l'issue d'une phase balistique. Ceci signifie notamment que, même lors d'une phase balistique, pendant laquelle le moteur n'est pas actif, une pression suffisante doit être assurée dans le réservoir d'ergol liquide pour que le débit nécessaire au redémarrage du moteur puisse être obtenu sans délai.

Cependant, par définition, les dispositifs de pressurisation qui utilisent seulement la chaleur de combustion du moteur ne permettent pas une pressurisation pendant les phases balistiques.

Par ailleurs, ainsi qu'il a été indiqué, la combustion est assurée par le mélange, dans la chambre de combustion de deux ergols. Si les deux ergols doivent être chauffés et pressurisés en utilisant uniquement la chaleur de combustion du moteur via des échangeurs de chaleur qui coopèrent avec la chambre de combustion, les échangeurs de chaleur fonctionnant respectivement pour chacun des deux ergols doivent être de structures complexes pour optimiser la récupération de chaleur. De plus, ils peuvent entrer en concurrence, de sorte qu'il est difficile d'obtenir la température et la pression souhaitées.

Il est également possible, pour pressuriser un ergol, d'utiliser un générateur de gaz dédié, alimenté par chacun des deux ergols pour provoquer une combustion générant la chaleur nécessaire au chauffage et à la pressurisation. Ceci nécessite un prélèvement de chacun des deux ergols dans leurs réservoirs respectifs et le générateur de gaz doit être dimensionné pour obtenir la température et la pression souhaitées.

Le document FR 2 976 626 divulgue un dispositif selon le préambule de la revendication 1, dans lequel les moyens de mise en pression de l'ergol sont une turbopompe du circuit d'alimentation du moteur, et dans lequel un réchauffeur secondaire, associé à un propulseur de tassement, est disposé en dérivation.

Le document US 2 701 441 divulgue un dispositif ayant deux réchauffeurs qui utilisent tous les deux la chaleur de propulsion du moteur.

La présente invention a pour but de proposer un dispositif de pressurisation d'un réservoir d'ergol conformément à la revendication 1, sensiblement exempt des inconvénients précités. Elle a en particulier pour but de proposer un dispositif utilisant des éléments simples, de poids et de coût modéré, permettant de pressuriser l'ergol aussi bien en phase de propulsion qu'en phase balistique.

Ce but est atteint grâce au fait que le réchauffeur primaire utilise la chaleur de combustion du moteur, que le dispositif comporte en outre un réchauffeur secondaire dont la source de chaleur est indépendante du fonctionnement du moteur, le réchauffeur secondaire étant disposé en aval du réchauffeur primaire, pour chauffer l'ergol entre sa sortie du réchauffeur primaire et sa réintroduction dans le réservoir, et que le dispositif comporte des moyens de mise en pression du fluide dans la boucle de pressurisation.

Le réchauffeur primaire est utile pendant les phases de propulsion. Il peut être d'une structure simple et, en particulier, avoir une masse réduite, car il suffit que ce réchauffeur primaire chauffe l'ergol et le vaporise, sans objectif de température exigeant. En effet, le réchauffeur secondaire est disposé en série avec ce réchauffeur primaire et poursuit donc le chauffage de manière à obtenir la pression désirée. Ce réchauffeur secondaire peut lui-même être dimensionné de manière à avoir une structure simple et un poids raisonnable puisqu'il ne fait que continuer le chauffage et la mise en pression initiée par le réchauffeur primaire. Les moyens de mise en pression sont disposés dans la boucle de pressurisation de l'ergol, qui va du prélèvement d'ergol à partir du réservoir primaire à son retour au réservoir en passant par le réchauffeur primaire.

Par ailleurs, en phase balistique, seul le réchauffeur secondaire est actif. Comme indiqué précédemment, il importe en phase balistique de maintenir une pressurisation du réservoir d'ergol. Toutefois, dans une telle phase, le moteur est inactif de sorte que l'ergol n'est pas consommé. Ainsi, la pressurisation consiste à maintenir le niveau de pressurisation plutôt que, comme en phase de propulsion, à compenser le débit d'ergol par un apport substantiel de gaz. En conséquence, il est possible avec un réchauffeur secondaire de structure simple et de poids modéré d'assurer la pressurisation nécessaire pour ce maintien en phase balistique.

Selon un mode de réalisation, le réchauffeur secondaire est un réchauffeur électrique.

Le réchauffeur secondaire peut ainsi comporter un ou plusieurs serpentins en contact avec des résistances, serpentins dans lesquels circule l'ergol pour être chauffé. Il peut également comporter une enceinte dans laquelle est située une résistance, pour y être baignée dans l'ergol. Quelle que soit la réalisation choisie, la structure du réchauffeur électrique est particulièrement simple et peu coûteuse.

Selon un mode de réalisation, la sortie du réchauffeur secondaire est apte à être reliée à une conduite d'éjection.

Par exemple, cette liaison s'opère via une vanne d'isolement qui peut être fermée pour autoriser seulement le retour du gaz sortant du réchauffeur vers le réservoir, et ouverte pour une éjection de ce gaz vers la conduite d'éjection. Ce gaz éjecté peut fournir une poussée complémentaire à celle du moteur lorsque cela est utile.

Avantageusement, les moyens de mise en pression du fluide entre l'alimentation du réchauffeur primaire et le retour de l'ergol au réservoir comprennent une motopompe, qui est avantageusement disposée en amont du réchauffeur primaire.

L'invention concerne également un ensemble propulsif comprenant un dispositif du type précité, pour pressuriser un premier réservoir contenant un premier ergol, un moteur de fusée alimenté par ledit premier ergol et par un deuxième ergol provenant d'un deuxième réservoir, et un circuit régénératif pour ledit deuxième ergol, ce circuit comprenant un échangeur de chaleur régénératif qui coopère avec le moteur pour chauffer le deuxième ergol avant sa réintroduction dans le deuxième réservoir, dans lequel le réchauffeur primaire coopère avec une conduite de sortie de l'échangeur de chaleur régénératif.

Ainsi, le réchauffeur primaire met à profit le circuit régénératif utilisé prioritairement pour chauffer le deuxième ergol, afin de réaliser un préchauffage et une vaporisation du premier ergol, ce préchauffage et cette vaporisation étant complétés par l'augmentation supplémentaire de la température opérée par le réchauffeur secondaire.

S'il est nécessaire de pressuriser le deuxième réservoir en phase balistique, on peut prévoir un circuit auxiliaire pour pressuriser le deuxième ergol sans utiliser la chaleur de combustion du moteur. On peut par exemple prévoir un petit générateur de gaz dédié, ou bien un réchauffeur analogue au réchauffeur secondaire précité, coopérant avec un prélèvement du deuxième ergol dans son réservoir.

Selon un mode de réalisation, le réchauffeur primaire comprend au moins un tube plongé dans la conduite de sortie.

Cette structure particulièrement simple permet la récupération de chaleur nécessaire au préchauffage et à la première pressurisation.

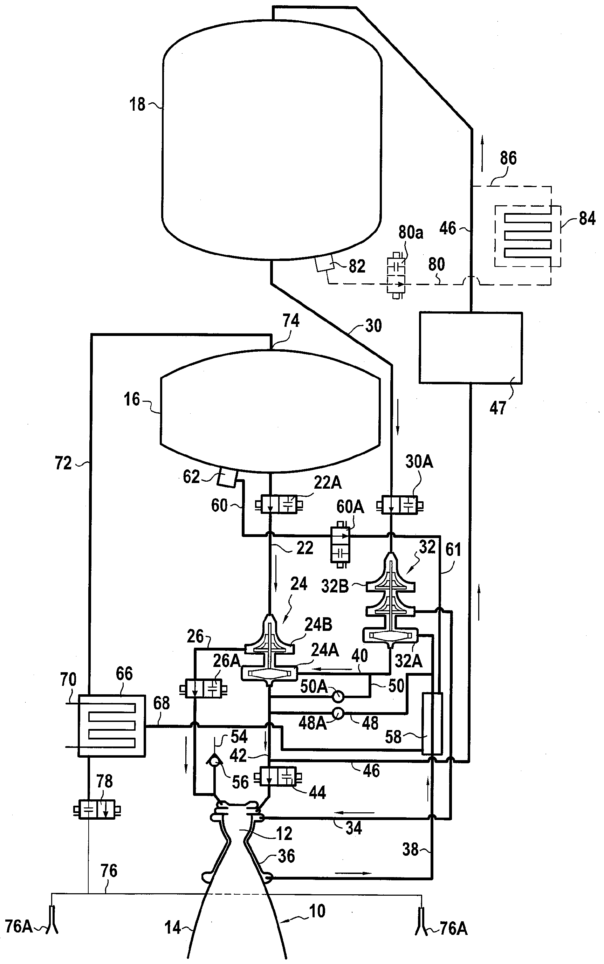

L'invention sera bien comprise et ses avantages apparaîtront mieux, à la lecture de la description détaillée qui suit, d'un mode de réalisation représenté à titre d'exemple non limitatif. La description se réfère à la figure annexée, qui représente un ensemble propulsif utilisant un dispositif de pressurisation selon l'invention.

L'ensemble propulsif représenté sur la figure comprend un moteur de fusée 10 ayant une chambre de combustion 12 et une tuyère 14 présentant un divergent. La chambre de combustion est alimentée en ergol à partir d'un premier réservoir 16 contenant un premier ergol, en particulier un ergol oxydant tel que de l'oxygène, et à partir d'un deuxième réservoir 18 comprenant un deuxième ergol, en particulier un ergol réducteur tel que de l'hydrogène ou du méthane. L'ergol réducteur sert de carburant, tandis que l'ergol oxydant sert de comburant pour la combustion.

L'alimentation en ergol à partir du premier réservoir 16 comprend une première conduite principale d'alimentation 22 débitant dans une première turbopompe 24 et une première conduite d'injection 26 reliée à la sortie de la première turbopompe 24. Cette première conduite d'injection 26 débite dans la chambre de combustion via une vanne d'isolement 26A. Une vanne d'autorisation 22A est également disposée sur la conduite 22.

L'alimentation en deuxième ergol comprend une deuxième conduite principale 30, sur laquelle est disposée une vanne d'autorisation 30A et qui débite dans une deuxième turbopompe 32 et une deuxième conduite d'injection 34 reliée à la sortie de la deuxième turbopompe.

En l'espèce, le moteur 10 est de type "expander" c'est-à-dire un moteur dans lequel le deuxième ergol est prélevé et vaporisé afin de fournir de l'énergie à certaines parties de l'ensemble propulsif. Plus précisément, la conduite d'injection 34 débite dans un réchauffeur 36 qui coopère avec la paroi de la chambre de combustion 12 pour, en phase de propulsion, chauffer le deuxième ergol circulant dans ce réchauffeur de manière à le vaporiser. En sortie du réchauffeur 36, le deuxième ergol est amené par une conduite 38 dans la partie turbine 32A de la turbopompe 32 pour entraîner sa turbine de manière à actionner sa partie pompe 32B, laquelle est en l'espèce à deux étages. En sortie de la partie turbine 32A, le deuxième ergol est amené par une conduite d'amenée 40 à l'entrée de la partie turbine 24A de la première turbopompe 24, de manière à actionner la partie pompe 24B de cette première turbopompe. En sortie de la partie turbine 24A, le deuxième ergol est amené à l'entrée de la chambre de combustion par une conduite d'injection 42. Une vanne d'isolement 44 est disposée dans la conduite d'injection 42, qui est reliée au deuxième réservoir 18 par l'intermédiaire d'un système de vanne de pressurisation et de détente 47. Le deuxième ergol vaporisé retourne ainsi au réservoir 18 pour y former un ciel gazeux dont la pression peut être réglée par le système 47.

Ainsi, l'ensemble propulsif comprend un circuit régénératif d'échange de chaleur qui utilise la chaleur de combustion du moteur 10 pour vaporiser le deuxième ergol. Ce circuit régénératif d'échange de chaleur comprend le réchauffeur 36 et les conduites 38, 40, 42 et 46.

Une conduite de bipasse 48 avec une vanne de bipasse 48A est disposée entre les conduites 38 et 42 pour bipasser l'entrée des turbines. Une autre conduite de bipasse 50 avec une vanne de bipasse 50A est disposée entre la sortie de la partie turbine de la turbopompe 32 et la conduite d'injection 42 pour bipasser la partie turbine 24A de la turbopompe 24. Ces conduites et vannes de bipasse permettent de régler le débit des ergols vers la chambre de combustion en dérivant une partie du débit passant dans les turbines 24A et 32A de manière à faire varier la surpression et le débit fournis par les pompes 24B et 32B.

L'injection en premier ergol s'opère directement par la conduite d'injection 26, alimentée par la turbopompe 24.

Le dispositif de pressurisation du premier ergol comprend un réchauffeur primaire 58 qui utilise la chaleur de combustion du moteur 10. En effet, ce réchauffeur primaire 58 coopère avec la conduite 38 de sortie du réchauffeur 36, qui s'étend entre ce réchauffeur 36 et l'entrée de la partie turbine 32A de la turbopompe 32. Le réchauffeur primaire est alimenté en premier ergol par une conduite d'alimentation 60 reliée au premier réservoir 16 par une motopompe 62 ou analogue. Une vanne d'autorisation 60A est disposée sur cette conduite d'alimentation 60. Plutôt que d'être reliée directement au réservoir 16 comme dans l'exemple représenté, la motopompe 62 pourrait être disposée en dérivation sur le tronçon de la conduite 22 qui s'étend entre le réservoir et la vanne 22A.

La sortie du réchauffeur primaire 58 est reliée à un réchauffeur secondaire 66 par une conduite de liaison 68. En d'autres termes, le réchauffeur secondaire 66 est disposé en série avec le réchauffeur primaire 58. En l'espèce, le réchauffeur secondaire comprend une enceinte dans laquelle circule le premier ergol provenant de la conduite 68, et dans laquelle est disposée une résistance électrique 70 alimentée par une alimentation électrique non représentée. Ainsi, le premier ergol subit, dans le réchauffeur primaire, un préchauffage permettant sa vaporisation, ce préchauffage étant complété par un chauffage supplémentaire dans le réchauffeur secondaire.

La sortie du réchauffeur secondaire 66 est reliée au réservoir 16 par un retour 74, via une conduite de retour 72, de manière que le premier ergol vaporisé vienne former un ciel gazeux dans le premier réservoir 16.

Par exemple, le réchauffeur primaire porte le premier ergol à une température de l'ordre de 110K de manière à le vaporiser, à une pression de l'ordre de 5 bars générée par la motopompe 62. Le réchauffeur secondaire permet d'obtenir une température de l'ordre de 180 à 210 K, permettant d'obtenir la pression nécessaire dans le ciel gazeux 16. On relève que la conduite de retour 72 coopère, du côté opposé au réservoir 16, avec une conduite d'éjection 76, via une vanne d'isolement 78. La vanne 78 peut être ouverte pour que l'oxygène gazeux s'échappant par les buses d'éjection 76A de la conduite d'échappement 76, contribue à la poussée du moteur lorsque cela est utile, par exemple en phase balistique, lorsqu'une très faible poussée est nécessaire, en particulier juste avant un redémarrage du moteur.

Dans l'exemple représenté, la motopompe 62 est disposée en amont du réchauffeur primaire, ce qui est une disposition avantageuse, permettant d'obtenir la pression de ciel d'ergol gazeux souhaitée dans le ciel du réservoir 16, avec une motopompe de petites capacité et puissance. On pourrait toutefois utiliser une motopompe dans une autre zone de la boucle de pressurisation de l'ergol, entre l'alimentation du réchauffeur primaire 58 et le retour 74 au réservoir.

Comme indiqué précédemment, le circuit régénératif permet de chauffer le deuxième ergol en phase de propulsion du moteur, et également de préchauffer le premier ergol par le réchauffeur primaire 58, ce préchauffage étant complété par le chauffage réalisé par le réchauffeur secondaire 66. En phase balistique, seul le réchauffeur 66 est actif et permet de porter le premier ergol à la température souhaitée pour maintenir la pression dans le réservoir 16.

Pour pressuriser le réservoir 18 en phase balistique, l'ensemble propulsif peut comprendre un circuit auxiliaire qui n'utilise pas la chaleur de combustion du moteur 10. On a indiqué en trait interrompu un exemple pour un tel circuit auxiliaire, qui fonctionne par prélèvement du deuxième ergol dans le réservoir 18, chauffage de ce deuxième ergol et réinjection de l'ergol gazeux dans le ciel du réservoir 18. Dans l'exemple représenté, ce circuit comprend une conduite d'alimentation 80 alimentée par une motopompe ou analogue 82 pour délivrer la pression et le débit souhaités, et sur laquelle est disposée une vanne d'isolement 80A. Sur cette conduite est également disposé un réchauffeur 84, par exemple du même type que le réchauffeur secondaire 66 précédemment décrit. En sortie de ce réchauffeur, l'ergol chaud et vaporisé retourne au réservoir via la conduite de retour 46 à laquelle est reliée la conduite de sortie 86 du réchauffeur 84.

## Revendications

1. Dispositif de pressurisation d'un réservoir d'ergol d'un moteur de fusée (10), comprenant une boucle de pressurisation ayant un réchauffeur primaire (58) apte à chauffer l'ergol provenant du réservoir (16) avant sa réintroduction dans ce réservoir, le réchauffeur primaire (58) utilisant la chaleur de combustion du moteur, le dispositif comportant en outre un réchauffeur secondaire (66) dont la source de chaleur est indépendante du fonctionnement du moteur, et des moyens (62) de mise en pression de l'ergol sur la boucle de pressurisation
**caractérisé en ce que** le réchauffeur secondaire est disposé en aval du réchauffeur primaire (58), pour chauffer l'ergol entre sa sortie du réchauffeur primaire et sa réintroduction dans le réservoir.

2. Dispositif selon la revendication 1, **caractérisé en ce que** le réchauffeur secondaire (66) est un réchauffeur électrique.

3. Dispositif selon la revendication 1 ou 2, **caractérisé en ce que** la sortie du réchauffeur secondaire (66) est apte à être reliée à une conduite d'éjection (76).

4. Dispositif selon l'une quelconque des revendications 1 à 3, **caractérisé en ce qu'**il comprend une motopompe (62) disposée en amont du réchauffeur primaire (58).

5. Ensemble propulsif comprenant un dispositif selon l'une quelconque des revendications 1 à 4 pour pressuriser un premier réservoir (16) contenant un premier ergol, un moteur de fusée (10) alimenté par ledit premier ergol et par un deuxième ergol provenant d'un deuxième réservoir (18), et un circuit régénératif (36, 28, 40, 42, 46) pour ledit deuxième ergol, ce circuit comprenant un échangeur de chaleur régénératif (36) qui coopère avec le moteur (10) pour chauffer le deuxième ergol avant sa réintroduction dans le deuxième réservoir,
**caractérisé en ce que** le réchauffeur primaire (58) coopère avec une conduite de sortie (38) de l'échangeur de chaleur régénératif (36).

6. Ensemble selon la revendication 5, **caractérisé en ce que** le réchauffeur primaire comprend au moins un tube plongé dans la conduite de sortie.

7. Ensemble selon la revendication 5 ou 6, **caractérisé en ce qu'**il comprend un circuit auxiliaire (80, 84, 86) pour pressuriser le deuxième réservoir sans utiliser la chaleur de combustion du moteur.

## Patentansprüche

1. Vorrichtung zur Druckbeaufschlagung eines Treibmittelbehälters eines Raketentriebwerks (10), umfassend eine Druckbeaufschlagungsschleife mit einem primären Erhitzer (58), der geeignet ist, das vom Behälter (16) kommende Treibmittel vor seiner Wiedereinleitung in den Behälter zu erhitzen, wobei der primäre Erhitzer (58) die Verbrennungswärme des Triebwerks verwendet, wobei die Vorrichtung ferner einen sekundären Erhitzer (66), dessen Wärmequelle vom Betrieb des Triebwerks unabhängig ist, und Mittel (62) zur Druckbeaufschlagung des Treibmittels in der Druckbeaufschlagungsschleife umfasst,
**dadurch gekennzeichnet, dass** der sekundäre Erhitzer stromabwärts zum primären Erhitzer (58) angeordnet ist, um das Treibmittel zwischen seinem Austritt aus dem primären Erhitzer und seiner Wiedereinleitung in den Behälter zu erhitzen.

2. Vorrichtung gemäß Anspruch 1, **dadurch gekennzeichnet, dass** der sekundäre Erhitzer (66) ein elektrischer Erhitzer ist.

3. Vorrichtung gemäß Anspruch 1 oder 2, **dadurch gekennzeichnet, dass** der Ausgang des sekundären Erhitzers (66) geeignet ist, mit einer Ausstoßleitung (76) verbunden zu werden.

4. Vorrichtung gemäß einem der Ansprüche 1 bis 3, **dadurch gekennzeichnet, dass** sie eine Motorpumpe (62) umfasst, die stromaufwärts zum primären Erhitzer (58) angeordnet ist.

5. Antriebseinheit, umfassend eine Vorrichtung nach einem der Ansprüche 1 bis 4, um einen ersten Behälter (16), der ein erstes Treibmittel enthält, ein Raketentriebwerk (10), das mit dem ersten Treibmittel und mit einem zweiten Treibmittel, das von einem zweiten Behälter (18) kommt, gespeist wird, und eine regenerative Schaltung (36, 28, 40, 42, 46) für das zweite Treibmittel mit Druck zu beaufschlagen, wobei diese Schaltung einen regenerativen Wärmetauscher (36) umfasst, der mit dem Motor (10) zusammenwirkt, um das zweite Treibmittel vor seiner Wiedereinleitung in den zweiten Behälter zu erhitzen,
**dadurch gekennzeichnet, dass** der primäre Erhitzer (58) mit einer Ausgangsleitung (38) des regenerativen Wärmetauschers (36) zusammenwirkt.

6. Einheit gemäß Anspruch 5, **dadurch gekennzeichnet, dass** der primäre Erhitzer mindestens ein in die Ausgangsleitung eingetauchtes Rohr umfasst.

7. Einheit gemäß Anspruch 5 oder 6, **dadurch gekennzeichnet, dass** sie eine Nebenschaltung (80, 84, 86) umfasst, um den zweiten Behälter mit Druck zu beaufschlagen, ohne die Verbrennungswärme des Motors zu verwenden.

## Claims

1. A pressurization device for pressurizing a propellant tank of a rocket engine (10), the device comprising a pressurization loop having a primary heater (58) suitable for heating the propellant coming from the tank (16) prior to it being reintroduced into the tank, the primary heater (58) using the heat of combustion from the engine, the device further including a secondary heater (66) having its source of heat independent from the operation of the engine and means (62) for putting the propellant under pressure in the pressurization loop, the pressurization device being **characterized in that** the secondary heater is arranged downstream from the primary heater (58) to heat the propellant between the propellant leaving the primary heater and being reintroduced into the tank.

2. A device according to claim 1, **characterized in that** the secondary heater (66) is an electric heater.

3. A device according to claim 1 or claim 2, **characterized in that** the outlet from the secondary heater (66) is suitable for being connected to an ejection pipe (76).

4. A device according to any one of claims 1 to 3, **characterized in that** it includes a motor-driven pump (62) arranged upstream from the primary heater (58).

5. A propulsion assembly including a device according to any one of claims 1 to 4 for pressurizing a first tank (16) containing a first propellant, a rocket engine (10) fed by said first propellant and by a second propellant coming from a second tank (18), and a regenerator circuit (36, 28, 40, 42, 46) for said second propellant, this circuit including a regenerative heat exchanger (36) that co-operates with the engine (10) to heat the second propellant prior to being reintroduced into the second tank, the propulsion assembly being **characterized in that** the primary heater (58) co-operates with an outlet pipe (38) of the regenerative heat exchanger (36).

6. An assembly according to claim 5, **characterized in that** the primary heater comprises at least one tube immersed in the outlet pipe.

7. An assembly according to claim 5 or claim 6, **characterized in that** it includes an auxiliary circuit (80, 84, 86) for pressurizing the second tank without using the heat of combustion from the engine.
